# EUROPEAN PATENT SPECIFICATION

(11) **EP 0 819 146 B1**
(45) Date of publication and mention of the grant of the patent: **07.07.1999**
(21) Application number: 95912514.7
(22) Date of filing: 27.03.1995
(51) Int. Cl.: C08J 7/06, C08J 7/12, D06M 10/04

(54) **PROCESS FOR THE MANUFACTURE OF A POLYOLEFIN SHAPED ARTICLE SHOWING IMPROVED CREEP PROPERTIES**
VERFAHREN ZUR HERSTELLUNG EINES FORMGEGENSTANDES AUS POLYOLEFIN MIT VERBESSERTER KRIECHFESTIGKEIT
PROCEDE DE FABRICATION D'UN ARTICLE FACONNE DE POLYOLEFINE COMPORTANT DES PROPRIETES AMELIOREES DE FLUAGE

(43) Date of publication of application: 21.01.1998
(73) Proprietor: DSM N.V., 6411 TE Heerlen (NL)
(72) Inventor: ZAMOTAEV, Pavel V., Kiev, 253160 (UA); CHOD K, Ivan, 941 01 Bratislava (SK); JACOBS, Martinus, Johannes, Nicolaas, NL-6416 EH Heerlen (NL)
(86) International application number: NL9500117
(87) International publication number: WO9630436

(56) References cited:
- EP-A- 0 132 407
- US-A- 2 873 241
- DATABASE WPI Derwent Publications Ltd., London, GB; AN 91-020697[03] & SU,A,1 565 857 (AS. UKR. PHYS. ORG. CHE.) 23 May 1990
- DATABASE WPI Derwent Publications Ltd., London, GB; AN 90-176463[23] & SE,A,8 802 943 (RANBY B. ET AL) 20 February 1990
- CHEMICAL ABSTRACTS, vol. 80, no. 12, 25 March 1974, Columbus, Ohio, US; abstract no. 60590d, KATO,T. 'Surface modification of high molecular compound by UV irradiation in presence of fluorine-containing gas' page 29 ;column R ; & JP,A,47 047 854 (MATSUSHITA ELECTRIC INDUSTRIAL CO., LTD.) 2 December 1972

## Description

The invention relates to a process for the manufacture of a polyolefin shaped article wherein a highly oriented polyolefin shaped article is impregnated by vapor absorption with a UV-initiator and subsequently UV-irradiated to react the UV-initiator with the polyolefin. Further the invention relates to polyolefin shaped articles showing enhanced creep properties, fabricated articles comprising an assembled plurality of such polyolefin shaped articles and a process for the manufacture of said fabricated articles. With shaped articles in particular mono- or multifilament fibers or tapes are meant.

Highly oriented polyolefin shaped articles have the problem that they show a relatively high creep, where creep is meant to be a relative deformation (in particular elongation) under a force constant. This creep elongation presents the problem that the said articles are not suited for example for rope applications involving static loading. Part of the creep appears to be irreversible and the irreversible creep elongation, which accumulates with repeated loading during the service life of the article, presents the problem that the article has a lower than desired service life. Numerous different methods are described to improve the resistance to creep of highly oriented polyolefin shaped articles in order to overcome the abovementioned problems.

Chen and Ranby describe in Polymers for Advanced Technologies Vol. 1, p. 103-107 a process for the manufacture of a polyolefin shaped article possessing enhanced creep resistance wherein a highly oriented polyolefin fiber is impregnated by vapor absorption with a UV-initiator and subsequently UV-irradiated to react the UV-initiator with the polyolefin. In this process benzophenone is used as the UV-initiator.

A disadvantage of this process is that it is required, in order to allow impregnation of the UV-initiator into the fiber, to impregnate at elevated temperatures (100°C). At this elevated temperature highly oriented polyolefin articles tend to shrink and to deteriorate in their mechanical properties. This can at least in part be prevented by keeping, in the known process, the fiber under constant strain to prevent shrinkage and loss of mechanical properties, which requires special equipment provisions.

The aim of the invention is to provide a process for the preparation of highly oriented polyolefin shaped articles possessing a better creep resistance than untreated articles that can be operated at a lower temperature than in the known process.

This aim is achieved by the invention in that the UV-initiator is a volatile oxygen free halogenated derivative of carbon, sulphur, phosphor or silicon or a combination of these compounds.

It has been found that these UV-initiators according to the invention can be impregnated into the highly oriented polyolefin shaped article even at room temperature and that they, after UV-irradiation, significantly improve the creep resistance of the articles. Evidently the UV-initiator can also be impregnated into the article at higher temperatures with the advantage of a shorter impregnation time than in the known process.

The term "UV-initiator" implies that the compound can be dissociated by UV radiation to form reactive parts which then react with the polyolefin. No further reactive substances are required to effect the creep resistance improvement. Preferably the halogen is chlorine. It has been found that the halogenated compounds easily penetrate into a polyolefin shaped article if the halogenated compound is small. Preferably the largest cross-sectional dimension is below 200 nm, more preferably below 150 nm, even more preferably below 100 nm and most preferably below 80 nm.

In "Die Angewandte Makromolekulare Chemie 210", (1993) 119-128 (Nr. 3648) a process is disclosed in which a highly oriented polyolefin shaped article is impregnated by vapor absorption at a low temperature using SO₂Cl₂ as the UV-initiator and is subsequently UV-irradiated. The document is however silent about the improvement of the creep resistance of the treated article. As described hereafter in Comparative experiment A it was found that a fiber treated with such an oxygen containing halogenated compound has a poor improvement of creep resistance and/or a poor retention of mechanical properties.

Very good results are obtained when the UV-initiator is an oxygen free halogenated hydrocarbon having 1-6 carbon atoms, sulphur halogenide, phosphorous halogenide or thiophosphoryl halogenide. Preferably the halogen is chlorine.

The most preferred UV-initiator is an oxygen free halogenated unsaturated hydrocarbon having 2 carbon atoms, for example CHCl=CCl₂. Polyolefin shaped articles that are treated with such a UV-initiator have a much lower creep rate and an almost complete suppression of the irreversible creep elongation. Further this UV-initiator is effective at a lower content.

Preferably the article comprises 0.1-10 w% (relative to the total weight of the article) of UV-initiator.

Highly oriented polyolefin shaped articles are for example described in GB-A-2,041,414, GB-A-2,051,667, US-A-4,413,110, US-A-4,551,296, EP-0,115,192 or WO-93/15118 and are characterised in that they have a high tenacity and a high modulus, typically a tenacity of at least 1 GPa and a modulus of at least 35 GPa. In view of obtaining the highest possible creep resistance the polyolefin shaped article has preferably a tenacity of at least 2 GPa, more preferably at least 2.5 GPa and most preferably at least 3 GPa and a modulus of at least 50 GPa more preferably at least 80 GPa and most preferably at least 100 GPa.

The impregnation is preferably carried out by exposing the polyolefin shaped articles to the vapours of the volatile halogenated compound at a temperature below 30°C. The advantage of the low impregnation temperature is that the risk of shrinkage and the subsequent loss of mechanical properties is avoided and that the total amount of UV-initiator that is impregnated into the polyolefin shaped article can be higher. The impregnation time is 1-48 hours depending on the choice of the specific UV-initiator and the desired level of creep resistance. Very good improvement of creep resistance can be obtained by impregnation at room temperature for 15-30 hours. In particular, when using a halogenated hydrocarbon having 1 or 2 carbon atoms, a sulphur halogenide, a phosphorous halogenide or a thiophosphoryl halogenide the impregnation time is relatively short.
Evidently the UV-initiators may also be impregnated into the polyolefin shaped article at a higher temperatures with the advantage of a significantly shorter impregnation time than in case of the prior art UV-initiators.
Preferably however the polyolefin shaped article is impregnated at a temperature below 80°C or preferably below 60°C to avoid shrinkage and loss of mechanical properties.

The process of impregnation and/or UV-irradiation may be repeated 1 to 3 times to obtain a further improvement of creep resistance. In a second treatment the temperature may be above 60°C or even above 80°C because due to the first treatment the temperature at which shrinkage occurs is raised.

Preferably the process is carried out in an inert or oxygenless atmosphere to avoid reaction of the UV-initiator or polyolefin in particular with oxygen.

The UV-irradiation is preferably carried out also below 30°C to avoid vaporisation of the UV-initiator out of the polyolefin shaped article. The irradiation time is preferably 1 to 10 minutes. The UV radiation preferably has a wavelength of 250-400 nm. It was found that with wavelengths below 250 nm in highly oriented polyolefin shaped articles chain scission occurs resulting in a decrease of mechanical properties. Above a wavelength of 400 nm the irradiation is less effective in dissociating the halogenated compounds.

The polyolefin shaped article may be subjected to a further stretching step between the impregnation with the UV-initiator and the UV-irradiation. Preferably however the article is UV-irradiated immediately after impregnation.

The invention further relates to a creep resistant polyolefin shaped article obtainable by a process according to the invention and to a creep resistant highly oriented polyolefin shaped article comprising a UV-initiator reacted with the polyolefin wherein the UV-initiator is a volatile oxygen free halogenated derivative of carbon, sulphur, phosphor or silicon or combinations thereof.

The creep resistance of the polyolefin shaped article of the invention is significantly improved. The creep resistance is quantified in the creep rate which is the relative elongation of the article per unit of time under a given load at a given temperature. Preferably, the creep rate is at most 2.10⁻⁸ s⁻¹ (as measured at 40°C under a 500 MPa load). Further it was found that the articles have an almost complete suppression of the irreversible creep elongation. Preferably the irreversible creep elongation at break (as measured at 40°C under a 500 MPa load) is at most 3%.

Preferably the creep rate is lower than 1x10⁻⁸ s⁻¹ , more preferably lower than 6x10⁻⁹ s⁻¹ and most preferably lower than 3x10⁻⁹ s⁻¹. The irreversible creep elongation at break is preferably at most 2% and most preferably at most 1%. The total creep elongation at break is preferably less than 6%, more preferably less than 4% and most preferably at most 2%.

The polyolefin shaped articles of the invention have, in comparison with untreated polyolefin shaped articles, a number of further advantages like an improved heat resistance, an improved adhesion to polar substances, an improved abrasion resistance and a lower shrinkage on exposure to high temperature.

It was further found that, whereas the prior art methods rely with respect to improvement of creep resistance on a high gel content (typically above 80%), the creep resistant polyolefin articles of the invention can have a high creep resistance at a relatively low gel content. The gel content is a measure of the degree of crosslinking. In particular when sulphur halogenide a phosphorous halogenide or a thiophosphoryl halogenide is used as UV-initiator a significant improvement of creep resistance was obtained with a gel content of below 80% or even below 70%. From this it may be concluded that the improvement of creep resistance by the UV-initiators according to the invention is based on a different mechanism than the prior art methods. It is proposed that the improvement of the creep resistance is a combined effect of crosslinking (X-links) and grafting (Y-links) of the polyolefin chains. In the creep resistant polyolefin shaped article according to the invention the UV-initiator is reacted with the polyolefin to form X-links and Y-links preferably in a total amount between 0.1 and 10 per 1000 carbon atoms of the polyolefin. The amount of X-links and Y-links can be measured with C¹³ NMR as described by Fumitaka Horii e.a. in Macromolecules, 1990, 23, P.977-981.

The invention further relates to creep resistant fabricated articles comprising an assembled plurality of creep resistant polyolefin shaped articles according to the invention.

Fabricated articles are for example composite yarns, spun yarns, woven, knitted, plaited or braided textile fabrics, non-wovens, felts, ropes or fishing lines. The creep resistant fabricated articles according to the invention have a longer service live, have a lower creep elongation, a higher temperature resistance and further advantages as described above for the creep resistant polyolefin shaped article.

A further aspect of the invention relates to a process for the manufacture of a creep resistant fabricated article as described above wherein a fabricated article comprising an assembled plurality of highly oriented polyolefin shaped articles is impregnated by vapor absorption with a volatile halogenated compound as the UV-initiator and is subsequently UV-irradiated to react the UV-initiator with the polyolefin. It was found that the highly oriented polyolefin shaped article has a very high transparency for UV-radiation, in particular in the wavelength range from 250 to 400 nm, and that hence also fabricated articles could be treated with the process of the invention. In this process the fabricated article preferably has a thickness of less than 5 mm, preferably less than 2 mm and more preferably less than 1 mm.

The invention further relates to composite material comprising creep resistant polyolefin shaped articles or fabricated articles as described above. Such composites have an improved shear strength, delamination strength and temperature resistance.

The invention is illustrated by the following examples.

### Examples I-V

Ultrahigh molecular weight polyethylene fibers (Spectra 900^{R} of Allied Signal Inc.) having a Young's modulus of 90 GPa and a tenacity of 2.8 GPa were wound on a quartz tube and placed in an exposure chamber. The chamber was connected to a closed flask containing the liquid UV-initiator. Both the chamber and the flask were at room temperature. The impregnation time was 24 hours. Subsequent to impregnation the samples were placed on a rotatable table that was placed in front of a DRT 1000 medium pressure Hg lamp. The samples rotated at 0.3 c/s. The radiation wavelength was between 243-363 nm. The distance from lamp to sample was 100-120 mm. The irradiation time was 3 minutes.

These preparations were repeated for several UV-initiators according to the invention as indicated in Table 1 (Examples 1 to 5).
The creep rate was measured in a dead load creep rig at room temperature at loads of 0.5 GPa or 0.8 GPa during 100 hours.
The gel content was determined as the weight percent of undissolved polymer network after 48 hr extraction of the fiber in boiling xylene containing an antioxidant (0.5% Diaphen NN).

**Table 1:**

| Creep of fibers according to the invention (Examples I-V) creep rate (1/s*10⁸) | | | | |
|---|---|---|---|---|
| Example | Initiator | Gel content (%) | 0.5 GPa | 0.8 GPa |
| I | CHCl=CCl₂ | 65.3 | < 0.3 | - |
| II | S₂Cl₂ | 5.3 | < 0.3 | 1 |
| III | PCl₃ | 42.5 | - | 0.6 |
| IV | PSCl₃ | 17.6 | - | < 1 |
| V | CFCl₃-CFCl₃ | 24.7 | 1.8 | - |

### Comparative Experiment A-C

Examples I-V were repeated using oxygen containing halogenated compounds. The results of the fibers and of an unsaturated fiber are given in Table 2.

**Table 2:**

| Creep of fibers not according to the invention (Comparative Experiment A-C) creep rate (1/s*10⁸) | | | | |
|---|---|---|---|---|
| Comp. Exp. | UV-initiator | Gel content (%) | 0.5 GPa | 0.8 GPa |
| A | Untreated | 0 | 6 | 10 |
| B | SO₂Cl₂ | 48.9 | 6 | 6 |
| C | CCl₃-(C=O)-CCl₃ | 10.1 | 3 | - |

### Examples VI-IX

The melting behaviour of the fibers under contraint was determined by fixing fibers of 0.2 m length on a metal frame. This frame was placed in an oven at 180°C for 1 min. All UV treated samples remained intact for at least 1 minute, while the untreated fibers (A) melted in seconds.

Ultra-high molecular weight polyethylene fibers of different draw ratio and hence different modulus were impregnated and UV treated using the procedure given above with a impregnation time of 48 hours and using CHCl=CCl₂ as the UV-initiator. The creep properties were determined at a temperature of 40°C and a load of 0.6 GPa; the result was that for all fibers the irreversible creep was suppressed essentially completely. Table 3 gives the results.

**Table 3:**

| Creep properties fibers having different modulus treated with CHCl=CCl₂ | | | | |
|---|---|---|---|---|
| Example | VI | VII | VIII | IX |
| Modulus (GPa) | 38 | 63 | 86 | 111 |
| creep rate (1/s*10⁸) | | | | |
| CHCl=CCl₂ | <50 | <4 | <0.2 | ^{∼}0.15 |
| Untreated | 300 | 30 | 10 | 6 |
| Irreversible elongation at break (%) | | | | |
| CHCl=CCl₂ | <0.1 | ^{∼}0.2 | <0.4 | ^{∼}0.4 |
| Untreated | >11 | >12 | >13 | >13 |

## Claims

1. Process for the manufacture of a polyolefin shaped article wherein a highly oriented polyolefin shaped article with a tenacity of at least 1 GPa and a modulus of at least 35 GPa is impregnated by vapor absorption with a UV-initiator and subsequently UV-irradiated to react the UV-initiator with the polyolefin, characterised in that the UV-initiator is a volatile oxygen free halogenated derivative of carbon, sulphur, phosphorous or silicon or combinations thereof.

2. Process according to claim 2, wherein the UV-initiator is an oxygen free halogenated hydrocarbon having 1-6 carbon atoms, a sulphur halogenide, a phosphorous halogenide or a thiophosphoryl halogenide.

3. Process according to claims 1 or 2, wherein the UV-initiator is a halogenated unsaturated hydrocarbon having 2 carbon atoms.

4. Process according to any one of claims 1 to 3, wherein the article comprises 0.1-10 wt.% (relative to the total weight) of UV-initiator.

5. Process according to any one of claims 1 to 4, wherein the article is impregnated at a temperature below 80°C.

6. Process according to any one of claims 1 to 4, wherein the article is impregnated at a temperature below 60°C.

7. Process according to any one of claims 1 to 6, wherein the article is impregnated and/or irradiated for 1 to 3 times.

8. Creep resistant highly oriented polyolefin shaped article with a tenacity of at least 1 GPa and a modulus of at least 35 GPa comprising a UV-initiator reacted with the polyolefin, characterised in that the UV-initiator is a volatile oxygen free halogenated derivative of carbon, sulphur, phosphor or silicon or combinations thereof.

9. Creep resistant polyolefin shaped article according to claim 8 having a creep rate measured at 40°C under a 500 GPa load of at most 2.10⁻⁸ s⁻¹ and an irreversible creep elongation at break of at most 3%.

10. Creep resistant polyolefin shaped article according to claim 8 or 9 wherein the UV-initiator is reacted with the polyolefin to form X-links (crosslinking) and Y-links (grafting) in a total amount between 0.1 and 10 per 1000 carbon atoms of the polyolefin, measured with C¹³ NMR.

11. Creep resistant fabricated article comprising an assembled plurality of creep resistant polyolefin shaped articles according to any one of claims 8 to 10.

12. Process for the manufacture of a creep resistant fabricated article in particular according to claim 11 wherein a fabricated article comprising an assembled plurality of highly oriented polyolefin shaped articles with a tenacity of at least 1 GPa and a modulus of at least 35 GPa is impregnated by vapor absorption with a volatile oxygen free halogenated derivative of carbon, sulphur, phosphor or silicon or combinations thereof as the UV-initiator and subsequently UV-irradiated to react the UV-initiator with the polyolefin.

13. Composite material comprising creep resistant polyolefin shaped articles according to any one of claims 8 to 10 or a fabricated article according to claim 11.

## Patentansprüche

1. Verfahren zur Herstellung eines Polyolefin-Formgegenstands, wobei ein stark gereckter Polyolefin-Formgegenstand mit einer Reißfestigkeit von mindestens 1 GPa und einem Modul von mindestens 35 GPa durch Dampfabsorption mit einem UV-Starter imprägniert wird und anschließend zur Umsetzung des UV-Starters mit dem Polyolefin mit UV bestrahlt wird, dadurch gekennzeichnet, daß der UV-Starter ein flüchtiges Sauerstoff-freies, halogeniertes Derivat von Kohlenstoff, Schwefel, Phosphor oder Silizium oder Kombinationen davon ist.

2. Verfahren nach Anspruch 1, wobei der UV-Starter ein Sauerstoff-freier, halogenierter Kohlenwasserstoff mit 1-6 Kohlenstoffatomen, ein Schwefelhalogenid, ein Phosphorhalogenid oder ein Thiophosphorylhalogenid ist.

3. Verfahren nach Ansprüchen 1 oder 2, wobei der UV-Starter ein halogenierter, ungesättigter Kohlenwasserstoff mit 2 Kohlenstoffatomen ist.

4. Verfahren nach einem der Ansprüche 1 bis 3, wobei der Gegenstand 0,1-10 Gewichtsprozent (bezogen auf das Gesamtgewicht) UV-Starter umfaßt.

5. Verfahren nach einem der Ansprüche 1 bis 4, wobei der Gegenstand bei einer Temperatur unterhalb 80°C imprägniert wird.

6. Verfahren nach einem der Ansprüche 1 bis 4, wobei der Gegenstand bei einer Temperatur unterhalb 60°C imprägniert wird.

7. Verfahren nach einem der Ansprüche 1 bis 6, wobei der Gegenstand 1- bis 3-mal imprägniert und/oder bestrahlt wird.

8. Kriechfester, stark gereckter Polyolefin-Formgegenstand mit einer Reißfestigkeit von mindestens 1 GPa und einem Modul von mindestens 35 GPa, umfassend einen mit dem Polyolefin umgesetzten UV-Starter, dadurch gekennzeichnet, daß der UV-Starter ein flüchtiges, Sauerstoff-freies, halogeniertes Derivat von Kohlenstoff, Schwefel, Phosphor oder Silizium oder Kombinationen davon ist.

9. Kriechfester Polyolefin-Formgegenstand nach Anspruch 8 mit einer Kriechrate, gemessen bei 40°C unter einer Last von 500 MPa von höchstens 2x10⁻⁸ s⁻¹ und einer irreversiblen Kriechdehnung beim Bruch von höchstens 3%.

10. Kriechfester Polyolefin-Formgegenstand nach Anspruch 8 oder 9, wobei der UV-Starter mit dem Polyolefin unter Erzeugung von X-Bindungen (Vernetzung) und Y-Bindungen (Pfropfung) in einer Gesamtmenge zwischen 0,1 und 10 pro 1000 Kohlenstoffatomen des Polyolefins, gemessen mit ¹³C-NMR, umgesetzt ist.

11. Kriechfester, gefertigter Gegenstand, umfassend eine angeordnete Vielzahl von kriechfesten Polyolefin-Formgegenständen nach einem der Ansprüche 8 bis 10.

12. Verfahren zur Herstellung eines kriechfesten Gegenstands, insbesondere nach Anspruch 11, wobei ein gefertigter Gegenstand, der eine angeordnete Vielzahl von stark gereckten Polyolefin-Formgegenständen mit einer Reißfestigkeit von mindestens 1 GPa und einem Modul von mindestens 35 GPa umfaßt, durch Dampfabsorption mit einem flüchtigen, Sauerstofffreien, halogenierten Derivat von Kohlenstoff, Schwefel, Phosphor oder Silizium oder Kombinationen davon als UV-Starter imprägniert wird und anschließend zur Umsetzung des UV-Starters mit dem Polyolefin UV-bestrahlt wird.

13. Verbundmaterial, umfassend kriechfeste Polyolefin-Formgegenstände nach einem der Ansprüche 8 bis 10 oder einen gefertigten Gegenstand nach Anspruch 11.

## Revendications

1. Procédé de fabrication d'un article façonné de polyoléfine, dans lequel un article façonné de polyoléfine hautement orientée d'une ténacité d'au moins 1 GPa et d'un module d'au moins 35 GPa est imprégné par absorption de vapeur d'un initiateur UV et soumis ensuite à une irradiation UV pour réaction de l'initiateur UV avec la polyoléfine, caractérisé en ce que l'initiateur UV est un dérivé halogéné volatil, exempt d'oxygène, du carbone, du soufre, du phosphore ou du silicium ou leurs combinaisons.

2. Procédé selon la revendication 1, dans lequel l'initiateur UV est un hydrocarbure halogéné exempt d'oxygène ayant 1-6 atomes de carbone, un halogénure de soufre, un halogénure de phosphore ou un halogénure de thiophosphoryle.

3. Procédé selon les revendications 1 ou 2, dans lequel l'initiateur UV est un hydrocarbure insaturé halogéné ayant 2 atomes de carbone.

4. Procédé selon l'une quelconque des revendications 1 à 3, dans lequel l'article comprend de 0,1 à 10 % en poids (par rapport au poids total) d'initiateur UV.

5. Procédé selon l'une quelconque des revendications 1 à 4, dans lequel l'article est imprégné à une température au-dessous de 80°C.

6. Procédé selon l'une quelconque des revendications 1 à 4, dans lequel l'article est imprégné à une température au-dessous de 60°C.

7. Procédé selon l'une quelconque des revendications 1 à 6, dans lequel l'article est imprégné et/ou irradié de 1 à 3 fois.

8. Article façonné de polyoléfine hautement orientée résistant au fluage, d'une ténacité d'au moins 1 GPa et d'un module d'au moins 35 GPa, comprenant un initiateur UV ayant réagi avec la polyoléfine, caractérisé en ce que l'initiateur UV est un dérivé halogéné volatil exempt d'oxygène du carbone, du soufre, du phosphore ou du silicium ou leurs combinaisons.

9. Article façonné de polyoléfine résistant au fluage selon la revendication 8, ayant une vitesse de fluage mesurée à 40°C sous une charge de 500 GPa d'au maximum 2.10⁻⁸ s⁻¹ et un allongement irréversible par fluage à la rupture d'au maximum 3 %.

10. Article façonné de polyoléfine résistant au fluage selon la revendication 8 ou 9, dans lequel l'initiateur UV est mis à réagir avec la polyoléfine pour former des liaisons X (réticulation) et des liaisons Y (greffage) dans une quantité totale comprise entre 0,1 et 10 pour 1000 atomes de carbone de la polyoléfine, la mesure étant effectuée par C¹³ RMN.

11. Article fabriqué résistant au fluage comprenant une multiplicité d'articles façonnés de polyoléfine résistant au fluage selon l'une quelconque des revendications 8 à 10.

12. Procédé de fabrication d'un article fabriqué résistant au fluage en particulier selon la revendication 11, dans lequel un article fabriqué comprenant une multiplicité assemblée d'articles façonnés de polyoléfine hautement orientée d'une ténacité d'au moins 1 GPa et d'un module d'au moins 35 GPa est imprégné par absorption de vapeur d'un dérivé halogéné volatil, exempt d'oxygène, du carbone, du soufre, du phosphore ou du silicium ou leurs combinaisons comme initiateur UV et est ensuite traité par irradiation UV pour réaction de l'initiateur UV avec la polyoléfine.

13. Matière composite comprenant des articles façonnés de polyoléfine résistant au fluage selon l'une quelconque des revendications 8 à 10 ou un article fabriqué selon la revendication 11.
